# EUROPÄISCHE PATENTSCHRIFT

(11) **EP 1 944 698 B1**
(45) Veröffentlichungstag und Bekanntmachung des Hinweises auf die Patenterteilung: **04.04.2012**
(21) Anmeldenummer: 07117526.9
(22) Anmeldetag: 28.09.2007
(51) Int. Cl.: G06F 13/40

(54) **Anordnungen, Verfahren und Vorrichtungen zur Übertragung von Daten zwischen einer Steuer-Einrichtung und einem elektrischen Gerät**
Assemblies, methods and devices for transmitting data between a controller and an electric device
Agencements, procédés et dispositifs de transmission de données entre un dispositif de commande et un appareil électrique

(30) Priorität: 08.12.2006 DE 102006059109
(43) Veröffentlichungstag der Anmeldung: 16.07.2008
(73) Patentinhaber: Cinterion Wireless Modules GmbH, 81669 München (DE)
(72) Erfinder: Blum, Ronald, 13591 Berlin (DE); Hinze, Thomas, 10585 Berlin (DE); Merz, Eberhard, 12163 Berlin (DE)
(74) Vertreter: Eisenführ, Speiser & Partner

(56) Entgegenhaltungen:
- DE-A1- 19 631 050
- US-A1- 2001 032 280
- US-A1- 2001 047 441
- COMPAQ HEWLETT-PACKARD INTEL LUCENT MICROSOFT NEC PHILIPS: "Universal Serial Bus Specification 2.0, CHAPTER 5 - USB DATA FLOW MODEL", INTERNET CITATION, XP002421758, Retrieved from the Internet: URL:http://www.usb.org/developers/docs/usb _20_05122006.zip [retrieved on 2007-02-22]

## Beschreibung

Die vorliegende Erfindung betrifft eine Anordnung zur Übertragung von Daten zwischen einer Steuer-Einrichtung und einem elektrischen Gerät, das über einen Anschluss mehrere logische Geräte bereitstellt.

Eine solche Anordnung ist beispielsweise in Form eines Rechners bekannt, der über USB (Universal Serial Bus) mit einem Peripheriegerät, etwa in Form eines Druckers oder einer Computer-Maus, verbunden ist. Bei USB handelt es sich um eine standardisierte serielle Schnittstelle, die insbesondere aufgrund ihrer Robustheit und der Einfachheit der Benutzung der entsprechenden Geräte weit verbreitet ist. So weisen elektrische Geräte, etwa in Form der genannten Peripheriegeräte, heutzutage häufig einen USB-Anschluss auf, über den diese elektrischen Geräte mit einem Rechner verbunden werden können. Dabei erlaubt es USB einem elektrischen Gerät, über einen Anschluss mehrere logische Geräte bereitzustellen. So ist es aus dem Dokument "Universal Serial Bus Specification; Compaq, Intel, Microsoft, NEC; Revision 1.1; September 23, 1998" bekannt, für ein elektrisches Gerät in Form eines USB-Gerätes bzw. "USB-Devices" mehrere logische Geräte in Form so genannter Interfaces zu definieren. Dies geschieht im Rahmen der Konfiguration des betreffenden USB-Gerätes. Gemäß Kapitel 9.2.3 des genannten Dokumentes bezieht sich ein Interface dabei jeweils auf eine einzelne Funktionalität, die das USB-Gerät gegenüber der Steuer-Einrichtung in Form eines USB-Hosts anbietet.

US 2001/0032280 beschreibt ein System bei dem mehrere USB-Geräte zwischen verschiedenen USB-Hosts separat zugeordnet werden.

Der vorliegenden Erfindung liegt die Aufgabe zugrunde, eine flexibel und vielseitig einsetzbare Anordnung der eingangs genannten Art anzugeben.

Diese Aufgabe wird erfindungsgemäß gelöst durch eine Anordnung zur Übertragung von Daten zwischen einer Steuereinrichtung und einem elektrischen Gerät, das über einen Anschluss mehrere logische Gerät bereitstellt, wobei die Anordnung eine zweite Steuer-Einrichtung sowie eine das elektrische Gerät jeweils über Schnittstellen mit den Steuer-Einrichtungen verbindende Verbindungs-Einrichtung aufweist, deren erste Schnittstelle zur Übertragung von einem logischen Gerät erster Art zugeordneten Daten mit der Steuer-Einrichtung verbunden ist, deren zweite Schnittstelle zur Übertragung von einem logischen Gerät zweiter Art zugeordneten Daten mit der zweiten Steuer-Einrichtung verbunden ist und deren dritte Schnittstelle zur Übertragung von jeweils einem logischen Gerät erster oder zweiter Art zugeordneten Daten mit dem Anschluss des elektrischen Gerätes verbunden ist.

Bei den zwischen der Steuer-Einrichtung und dem elektrischen Gerät übertragenen Daten kann es sich einerseits um Steuerdaten, etwa zum Anmelden des elektrischen Gerätes bei der Steuer-Einrichtung oder zum Steuern der Funktionalität des elektrischen Gerätes durch die Steuer-Einrichtung, handeln. Anderseits kann es sich bei den Daten auch um Übertragungsdaten, etwa in Form von durch das elektrische Gerät erfassten Messdaten, handeln. In der Regel werden die zwischen dem elektrischen Gerät und der Steuer-Einrichtung übertragenen Daten sowohl Steuer- als auch über Übertragungsdaten umfassen. Generell kann dabei die Übertragung der Daten sowohl unidirektional, d.h. entweder ausschließlich von der Steuer-Einrichtung zu dem elektrischen Gerät oder von dem elektrischen Gerät zu der Steuer-Einrichtung, oder aber auch bidirektional erfolgen. Daher umfasst die Formulierung "Übertragung zwischen" im Rahmen der vorliegenden Erfindung das Senden und/oder Empfangen von Daten.

Die Steuer-Einrichtung kann beispielsweise durch einen Rechner oder einen Prozessor gegeben sein; bei dem elektrischen Gerät kann es sich grundsätzlich um eine beliebige Art von Vorrichtung, z.B. eines der eingangs genannten Peripheriegeräte, handeln. Dabei ist es nicht entscheidend, dass die als Steuer-Einrichtung bezeichnete Vorrichtung tatsächlich eine steuernde Funktion wahrnimmt, sondern dass eine Übertragung von Daten zwischen der Steuer-Einrichtung und dem elektrischen Gerät erfolgt.

Die erfindungsgemäße Anordnung ist vorteilhaft, da sie es ermöglicht, ein elektrisches Gerät gleichzeitig mit zwei verschiedenen Steuer-Einrichtungen zu verbinden. Zu diesem Zweck weist die Anordnung eine Verbindungs-Einrichtung auf, die jeweils über eine Schnittstelle mit der Steuer-Einrichtung, der zweiten Steuer-Einrichtung und dem Anschluss des elektrischen Gerätes verbunden ist. Dabei dient die erste Schnittstelle zur Übertragung von einem logischen Gerät erster Art zugeordneten Daten zwischen der Verbindungs-Einrichtung und der Steuer-Einrichtung. Dies bedeutet, dass solche Daten, die einem logischen Gerät erster Art zugeordnet sind, d.h. einem logischen Gerät, das der Steuer-Einrichtung zur Verfügung gestellt werden soll, über die erste Schnittstelle zwischen der Verbindungs-Einrichtung und der Steuer-Einrichtung übertragen werden können.

Entsprechend ist die zweite Schnittstelle der Verbindungs-Einrichtung zur Übertragung von einem logischen Gerät zweiter Art, d.h. einem logischen Gerät, das der zweiten Steuer-Einrichtung zur Verfügung gestellt werden soll, zugeordneten Daten mit der zweiten Steuer-Einrichtung verbunden. Dies bietet den Vorteil, dass logische Geräte zweiter Art des elektrischen Gerätes, die an die zweite Steuer-Einrichtung angebunden werden sollen, über die zweite Schnittstelle zwischen der Verbindungs-Einrichtung und der zweiten Steuer-Einrichtung übertragen werden können.

Über die dritte Schnittstelle der Verbindungs-Einrichtung können sowohl einem logischen Gerät erster als auch einem logischen Gerät zweiter Art zugeordnete Daten zwischen der Verbindungs-Einrichtung und dem Anschluss des elektrischen Gerätes übertragen werden. Dies geschieht vorteilhafterweise über eine gemeinsame physikalische Verbindung. Dabei kann der Anschluss des elektrischen Gerätes in Abhängigkeit von der über den Anschluss bereitgestellten drahtgebundenen oder drahtlosen Schnittstelle auf unterschiedliche Art und Weise ausgeprägt sein. Beispiele für entsprechende Schnittstellen sind USB bzw. Bluetooth.

Die erfindungsgemäße Anordnung bietet insbesondere auch den Vorteil, dass vorzugsweise weder seitens des elektrischen Gerätes noch seitens der Steuer-Einrichtungen Anpassungen erforderlich sind. Dies gilt, obwohl das elektrische Gerät sowohl mit der Steuer-Einrichtung als auch mit der zweiten Steuer-Einrichtung jeweils bezüglich zumindest eines logischen Gerätes verbunden ist, d.h. die betreffenden logischen Geräte der jeweiligen Steuer-Einrichtung bereitstellt.

An dieser Stelle sei angemerkt, dass die vorliegende Erfindung sowie ihre im Folgenden beschriebenen bevorzugten Weiterbildungen grundsätzlich auch für mehr als zwei Steuer-Einrichtungen anwendbar sind. So ist es beispielsweise auch denkbar, dass mittels der Verbindungs-Einrichtung die logischen Geräte eines elektrischen Gerätes auf drei oder mehr Steuer-Einrichtungen aufgeteilt werden. Grundsätzlich ist eine erfindungsgemäße Aufteilung der logischen Geräte eines elektrischen Gerätes auf mehrere Steuer-Einrichtungen insbesondere dann vorteilhaft, wenn eine der Steuer-Einrichtungen, an die das elektrische Gerät angebunden ist, nicht in der Lage ist, alle von dem elektrischen Gerät zur Verfügung gestellten logischen Geräte zu betreiben. In diesem Fall ist eine Aufteilung der logischen Geräte des elektrischen Gerätes auf mehrere Steuer-Einrichtungen erforderlich, um alle logischen Geräte des elektrischen Gerätes jeweils an eine Steuer-Einrichtung anbinden zu können.

In einer bevorzugten Ausführungsform ist die erfindungsgemäße Anordnung derart ausgestaltet, dass die Schnittstellen USB (Universal Serial Bus)-Schnittstellen sind, wobei das elektrische Gerät als USB-Gerät, der Anschluss als USB-Anschluss und die Steuer-Einrichtungen als USB-Hosts ausgebildet ist bzw. sind, und die Verbindungs-Einrichtung gegenüber dem elektrischen Gerät als USB-Host und gegenüber den Steuer-Einrichtungen als USB-Gerät ausgebildet ist. Dies bietet den Vorteil, dass es sich bei USB um eine weit verbreitete Schnittstelle handelt. Vorteilhafterweise wird es hierdurch ermöglicht, die logischen Geräte eines USB-Gerätes unterschiedlichen USB-Hosts zur Verfügung zu stellen. Zu diesem Zwecke dient die Verbindungs-Einrichtung dem elektrischen Gerät in Form des USB-Gerätes als USB-Host. Weiterhin dient die Verbindungs-Einrichtung den beiden Steuer-Einrichtungen in Form der USB-Hosts als USB-Gerät. Dabei ist die Verbindungs-Einrichtung vorzugsweise dahingehend für das elektrische Gerät sowie die Steuer-Einrichtungen transparent, dass Änderungen der beteiligten Komponenten aufgrund der Übertragung von Daten jeweils für zumindest ein logisches Gerät des elektrischen Gerätes zwischen der Steuer-Einrichtung und dem elektrischen Gerät bzw. zwischen der zweiten Steuer-Einrichtung und dem elektrischen Gerät nicht erforderlich sind. Durch die Verbindungs-Einrichtung wird es somit vorteilhafterweise ermöglicht, dass für die über die erste beziehungsweise die zweite Schnittstelle mit der Verbindungs-Einrichtung verbundenen Steuer-Einrichtungen jeweils nur eine Untermenge der logischen Geräte des über die dritte Schnittstelle an die Verbindungs-Einrichtung angeschlossenen elektrischen Gerätes sichtbar sind.

In einer weiteren bevorzugten Ausführungsform der erfindungsgemäßen Anordnung sind die logischen Geräte USB-Interfaces des elektrischen Gerätes. Dies bietet den Vorteil, dass es sich bei USB-Interfaces um bereits definierte und weit verbreitete logische Geräte eines elektrischen Gerätes in Form eines USB-Gerätes handelt. Diese logischen Geräte können nun physikalisch getrennt mehreren Steuer-Einrichtungen in Form von USB-Hosts zur Verfügung gestellt werden.

Vorzugsweise kann die erfindungsgemäße Anordnung auch so ausgestaltet sein, dass das elektrische Gerät ein Funkmodul ist. Diese Ausführungsform der erfindungsgemäßen Anordnung ist besonders bevorzugt, da Funkmodule neben einer drahtlosen Funkschnittstelle häufig weitere Schnittstellen, beispielsweise in Form einer USB-Schnittstelle, aufweisen. Diese Schnittstelle kann beispielsweise dazu dienen, den Ablauf des Funkmoduls betreffende Daten, etwa in Form so genannter Diagnosedaten oder Traces, von dem Funkmodul an eine Steuer-Einrichtung in Form eines Rechners zur nachfolgenden Auswertung zu übertragen. Dabei kann das Funkmodul über die USB-Schnittstelle von einer Steuer-Einrichtung ansteuerbar sein, seine Funktion als Kommunikationsschnittstelle zu einem Mobilfunknetz jedoch im Wesentlichen unabhängig von der Steuer-Einrichtung erbringen. Sofern nun beispielsweise die das Funkmodul steuernde Steuer-Einrichtung nicht zur Verarbeitung der den Ablauf des Funkmoduls betreffenden Daten ausgebildet ist, so besteht erfindungsgemäß die Möglichkeit, die logischen Geräte des elektrischen Gerätes in Form des Funkmoduls auf mehrere Steuer-Einrichtungen zu verteilen, d.h. diese logischen Geräte mehreren Steuer-Einrichtungen zur Verfügung zu stellen. Dies ermöglicht eine Übertragung von Daten, jeweils spezifisch für das betreffende logische Gerät, jeweils zwischen dem Funkmodul und einer ersten Steuer-Einrichtung bzw. dem Funkmodul und einer zweiten Steuer-Einrichtung.

Die Erfindung betrifft weiterhin ein Verfahren zur Übertragung von Daten zwischen einer Steuer-Einrichtung und einem elektrischen Gerät, das über einen Anschluss mehrere logische Geräte bereitstellt.

Hinsichtlich des Verfahrens liegt der vorliegenden Erfindung die Aufgabe zugrunde, ein flexibel und vielseitig einsetzbares Verfahren der genannten Art anzugeben.

Diese Aufgabe wird erfindungsgemäß gelöst durch ein Verfahren zur Übertragung von Daten zwischen einer Steuer-Einrichtung und einem elektrischen Gerät, das über einen Anschluss mehrere logische Geräte bereitstellt, bei dem nach Anbinden des elektrischen Gerätes über den Anschluss an eine Verbindungs-Einrichtung und Anbinden der Verbindungs-Einrichtung an die Steuer-Einrichtung sowie an eine zweite Steuer-Einrichtung einem logischen Gerät erster Art zugeordnete Daten zwischen einer ersten Schnittstelle der Verbindungs-Einrichtung und der Steuer-Einrichtung übertragen werden, einem logischen Gerät zweiter Art zugeordnete Daten zwischen einer zweiten Schnittstelle der Verbindungs-Einrichtung und der zweiten Steuer-Einrichtung übertragen werden und jeweils einem logischen Gerät erster oder zweiter Art zugeordnete Daten zwischen einer dritten Schnittstelle der Verbindungs-Einrichtung und dem Anschluss des elektrischen Gerätes übertragen werden. Es sei darauf hingewiesen, dass die Schritte des erfindungsgemäßen Verfahrens auch in einer anderen Reihenfolge ablaufen können; wesentlich ist, dass zwischen dem elektrischen Gerät und den Steuer-Einrichtungen jeweils eine Übertragung von Daten erfolgt, nicht jedoch die Reihenfolge dieser Übertragungen.

Das erfindungsgemäße Verfahren ist bevorzugt, da es ermöglicht, dass einem logischen Gerät erster Art zugeordnete Daten zwischen einer ersten Schnittstelle der Verbindungs-Einrichtung und der Steuer-Einrichtung übertragen werden, während einem logischen Gerät zweiter Art zugeordnete Daten zwischen einer zweiten Schnittstelle der Verbindungs-Einrichtung und der zweiten Steuer-Einrichtung übertragen werden. Dabei werden sowohl jeweils einem logischen Gerät erster als auch einem logischen Gerät zweiter Art zugeordnete Daten zwischen einer dritten Schnittstelle der Verbindungs-Einrichtung und dem Anschluss des elektrischen Gerätes übertragen.

Vorzugsweise ist das erfindungsgemäße Verfahren derart ausgestaltet, dass als elektrisches Gerät ein USB-Gerät mit einem Anschluss in Form eines USB-Anschlusses und als Steuer-Einrichtungen USB-Hosts verwendet wird bzw. werden, wobei die Verbindungs-Einrichtung gegenüber dem elektrischen Gerät als USB-Host und gegenüber den Steuer-Einrichtungen als USB-Gerät dient. Diese Ausführungsform des erfindungsgemäßen Verfahrens ist bevorzugt, da sie es ermöglicht, ein elektrisches Gerät in Form eines USB-Gerätes gleichzeitig derart an zwei Steuer-Einrichtungen in Form von USB-Hosts anzubinden, dass einem logischen Gerät erster Art zugeordnete Daten über die Verbindungs-Einrichtung zwischen dem elektrischen Gerät und der Steuer-Einrichtung übertragen werden, während einem logischen Gerät zweiter Art zugeordnete Daten über die zweite Schnittstelle der Verbindungs-Einrichtung zwischen dem elektrischen Gerät und der zweiten Steuer-Einrichtung übertragen werden. Dies bedeutet, dass die logischen Geräte des elektrischen Gerätes in Form des USB-Gerätes jeweils einer der beiden Steuer-Einrichtungen zwecks Übertragung von Daten zur Verfügung gestellt werden können. Vorzugsweise sind dabei die jeweils anderen logischen Geräte für die jeweilige Steuer-Einrichtung nicht sichtbar.

In einer weiteren bevorzugten Ausführungsform des erfindungsgemäßen Verfahrens werden als logische Geräte USB-Interfaces des elektrischen Gerätes verwendet. Dies bietet insbesondere den Vorteil, dass es sich bei USB-Interfaces um die übliche, weit verbreitete Art von im Zusammenhang mit USB-Geräten verwendeten logischen Geräten handelt.

Vorzugsweise kann das erfindungsgemäße Verfahren auch derart ausgeprägt sein, dass als elektrisches Gerät ein Funkmodul verwendet wird. Diese Ausführungsform des erfindungsgemäßen Verfahrens ist bevorzugt, da es hierdurch ermöglicht wird, ein Funkmodul gleichzeitig an mehrere Steuer-Einrichtungen anzubinden, wobei Daten in Abhängigkeit davon, ob sie einem logischen Gerät erster Art oder einem logischen Gerät zweiter Art zugeordnet sind, entweder zwischen dem Funkmodul und der Steuer-Einrichtung oder zwischen dem Funkmodul und der zweiten Steuer-Einrichtung übertragen werden. Hierdurch wird die Vielseitigkeit der Einsetzbarkeit von Funkmodulen weiter erhöht. Es sei betont, dass in diesem Fall die dritte Schnittstelle, über die der Anschluss des Funkmoduls mit der Verbindungs-Einrichtung verbunden ist, in der Regel nicht mit der Funkschnittstelle des Funkmoduls identisch ist.

Weitere Vorteile des erfindungsgemäßen Verfahrens sowie seiner bevorzugten Weiterbildungen ergeben sich aus den entsprechenden Ausführungen im Zusammenhang mit der erfindungsgemäßen Anordnung.

Die Erfindung betrifft weiterhin eine Vorrichtung zur Übertragung von Daten zwischen einer Steuer-Einrichtung und einem elektrischen Gerät, das über einen Anschluss mehrere logische Geräte bereitstellt.

Hinsichtlich der Vorrichtung liegt der vorliegenden Erfindung die Aufgabe zugrunde, eine flexibel und vielseitig einsetzbare Vorrichtung der genannten Art anzugeben.

Diese Aufgabe wird erfindungsgemäß gelöst durch eine Verbindungs-Einrichtung zur Übertragung von Daten zwischen einer Steuer-Einrichtung und einem elektrischen Gerät, das über einen Anschluss mehrere logische Geräte bereitstellt, sowie zwischen einer zweiten Steuer-Einrichtung und dem elektrischen Gerät, die Verbindungs-Einrichtung mit einer ersten Schnittstelle zur Übertragung von einem logischen Gerät erster Art zugeordneten Daten zwischen der Verbindungs-Einrichtung und der Steuer-Einrichtung, einer zweiten Schnittstelle zur Übertragung von einem logischen Gerät zweiter Art zugeordneten Daten zwischen der Verbindungs-Einrichtung und der zweiten Steuer-Einrichtung und einer dritten Schnittstelle zur Übertragung von jeweils einem logischen Gerät erster oder zweiter Art zugeordneten Daten zwischen der Verbindungs-Einrichtung und dem Anschluss des elektrischen Gerätes.

Die erfindungsgemäße Verbindungs-Einrichtung ist vorteilhaft, da sie zur Übertragung von einem logischen Gerät erster Art zugeordneten Daten zwischen dem elektrischen Gerät und der Steuer-Einrichtung und zur Übertragung von einem logischen Gerät zweiter Art zugeordneten Daten zwischen dem elektrischen Gerät und der zweiten Steuer-Einrichtung ausgebildet ist.

Vorzugsweise ist die erfindungsgemäße Verbindungs-Einrichtung derart ausgestaltet, dass die Schnittstellen USB (Universal Serial Bus)-Schnittstellen sind und die Verbindungs-Einrichtung gegenüber dem elektrischen Gerät als USB-Host und gegenüber den Steuer-Einrichtungen als USB-Gerät ausgebildet ist. Dies bietet den Vorteil, dass es sich bei USB um eine weit verbreitete Schnittstelle zur Übertragung von Daten zwischen einer Steuer-Einrichtung und einem elektrischen Gerät handelt.

Weitere Vorteile der erfindungsgemäßen Verbindungs-Einrichtung sowie ihrer bevorzugten Weiterbildung ergeben sich aus den entsprechenden Ausführungen im Zusammenhang mit der erfindungsgemäßen Anordnung und dem erfindungsgemäßen Verfahren.

Die der vorliegenden Erfindung zugrunde liegende Aufgabe wird hinsichtlich der Anordnung erfindungsgemäß weiterhin gelöst durch eine Anordnung zur Übertragung von Daten zwischen einer Steuer-Einrichtung und einem elektrischen Gerät, das über einen Anschluss ersten Typs zumindest ein logisches Gerät bereitstellt, wobei die Anordnung eine das elektrische Gerät über Schnittstellen mit der Steuer-Einrichtung verbindende Verbindungs-Einheit aufweist mit einer steuereinrichtungsseitigen Schnittstelle ersten Typs zur Übertragung von jeweils einem logischen Gerät erster oder zweiter Art zugeordneten Daten zwischen der Verbindungs-Einheit und der Steuer-Einrichtung, einer geräteseitigen Schnittstelle des ersten Typs zur Übertragung der einem logischen Gerät erster Art zugeordneten Daten zwischen der Verbindungs-Einheit und dem Anschluss ersten Typs des elektrischen Gerätes, einer geräteseitigen Schnittstelle zweiten Typs zur Übertragung der Daten zwischen der Verbindungs-Einheit und einem Anschluss zweiten Typs des elektrischen Gerätes und einem zwischen der steuereinrichtungsseitigen Schnittstelle ersten Typs und der geräteseitigen Schnittstelle zweiten Typs angeordneten Datenwandler.

Die weitere erfindungsgemäße Anordnung ist vorteilhaft, da sie eine das elektrische Gerät über Schnittstellen mit der Steuer-Einrichtung verbindende Verbindungs-Einheit aufweist. Diese verfügt über eine steuereinrichtungsseitige Schnittstelle ersten Typs zur Übertragung von jeweils einem logischen Gerät erster oder zweiter Art zugeordneten Daten zwischen der Verbindungs-Einheit und der Steuer-Einrichtung. Darüber hinaus weist die Verbindungs-Einheit eine geräteseitige Schnittstelle des ersten Typs zur Übertragung der einem logischen Gerät erster Art zugeordneten Daten zwischen der Verbindungs-Einheit und dem Anschluss ersten Typs des elektrischen Gerätes auf sowie eine geräteseitige Schnittstelle zweiten Typs zur Übertragung von Daten zwischen der Verbindungs-Einheit und einem Anschluss zweiten Typs des elektrischen Gerätes. Dies bedeutet, dass die Verbindungs-Einheit es ermöglicht, über eine Schnittstelle zweiten Typs übertragene Daten einer Steuer-Einrichtung in Form zumindest eines zusätzlichen logischen Gerätes zur Verfügung zu stellen. Somit ist es vorteilhafterweise nicht erforderlich dass die Steuer-Einrichtung überhaupt über eine Schnittstelle zweiten Typs verfügt, da sich ihr gegenüber die über die Schnittstelle zweiten Typs übertragenen Daten als zusätzliches logisches Gerät darstellen. Dies hat zur Folge, dass seitens der Steuer-Einrichtung vorzugsweise eine Unterscheidung des logischen Gerätes bzw. der logischen Geräte, dessen bzw. deren Daten über die Schnittstelle ersten Typs übertragen werden, und der über die Schnittstelle zweiten Typs des elektrischen Gerätes übertragenen Daten nicht erforderlich ist. So erscheinen letztere Daten der Steuer-Einrichtung gegenüber vorteilhafterweise als einem zusätzlichen logischen Gerät der Schnittstelle ersten Typs zugeordnete Daten.

Der zwischen der steuereinrichtungsseitigen Schnittstelle und der geräteseitigen Schnittstelle zweiten Typs angeordnete Datenwandler dient der in Abhängigkeit von der Übertragungsrichtung der Daten jeweils erforderlichen Umwandlung der Daten. So führt er im Falle von in Richtung der Steuer-Einrichtung übertragenen Daten eine Umwandlung der übertragenen Daten von einem von der geräteseitigen Schnittstelle zweiten Typs unterstützten Format in ein von der steuereinrichtungsseitigen Schnittstelle ersten Typs unterstütztes Format bzw. im Falle von in Richtung des elektrischen Gerätes übertragenen Daten eine Umwandlung der übertragenen Daten von einem von der steuereinrichtungsseitigen Schnittstelle ersten Typs unterstützten Format in ein von der geräteseitigen Schnittstelle zweiten Typs unterstütztes Format durch. Bei einer entsprechenden Umwandlung kann es sich beispielsweise um eine Umwandlung eines auf der steuereinrichtungsseitigen Schnittstelle des ersten Typs verwendeten Protokolls in ein auf der geräteseitigen Schnittstelle zweiten Typs verwendetes Protokoll handeln. Generell umfasst der Begriff "Daten" wiederum beliebige Arten von Steuer- oder Übertragungsdaten. In welchem Umfang und für welche Arten von Daten eine Umwandlung erforderlich ist, hängt dabei von den konkret jeweils verwendeten Schnittstellen ersten und zweiten Typs ab.

In einer bevorzugten Ausführungsform der weiteren erfindungsgemäßen Anordnung sind die steuereinrichtungsseitige Schnittstelle ersten Typs und die geräteseitige Schnittstelle des ersten Typs USB (Universal Serial Bus)-Schnittstellen, wobei das elektrische Gerät als USB-Gerät, der Anschluss ersten Typs als USB-Anschluss und die Steuer-Einrichtung als USB-Host ausgebildet ist, und die Verbindungs-Einheit gegenüber dem elektrischen Gerät als USB-Host und gegenüber der Steuer-Einrichtung als USB-Gerät ausgebildet ist. Diese Ausführungsform der erfindungsgemäßen Anordnung ist bevorzugt, da sie es ermöglicht, dass ein Anschluss zweiten Typs des elektrischen Gerätes in Form eines USB-Gerätes der Steuer-Einrichtung in Form eines USB-Hosts als logisches Gerät des USB-Gerätes bereitgestellt wird. Somit kann eine entsprechende Schnittstelle zweiten Typs zusätzlich als logisches Gerät des USB-Gerätes bei dem USB-Host angemeldet und von diesem genauso wie die anderen logischen Geräte des elektrischen Gerätes angesprochen und gegebenenfalls gesteuert werden.

In einer weiteren bevorzugten Ausführungsform kann die weitere erfindungsgemäße Anordnung auch derart ausgestaltet sein, dass die logischen Geräte USB-Interfaces des elektrischen Gerätes sind. Dies ist vorteilhaft, da es sich bei USB-Interfaces um eine im Zusammenhang mit USB-Geräten gebräuchliche Art von logischen Geräten handelt.

In einer weiteren bevorzugten Weiterbildung der weiteren erfindungsgemäßen Anordnung ist die geräteseitige Schnittstelle zweiten Typs eine COM/RS232-Schnittstelle. Dies bietet den Vorteil, dass eine von einem elektrischen Gerät zusätzlich beispielsweise zu einer USB-Schnittstelle zur Verfügung gestellte COM/RS232-Schnittstelle mit Hilfe der Verbindungs-Einheit in ein logisches Gerät bezüglich der Funktion des elektrischen Gerätes als USB-Gerät umgewandelt werden kann. Somit stellt sich das elektrische Gerät aus Sicht der Steuer-Einrichtung als ein elektrisches Gerät dar, das über ein zusätzliches logisches Gerät verfügt. Tatsächlich handelt es sich bei den diesem zumindest einen zusätzlichen "logischen Gerät" zugeordneten Daten jedoch um über die COM/RS232-Schnittstelle übertragene, eine bestimmte Funktionalität des elektrischen Gerätes betreffende Daten. Ein Unterschied zwischen dem "logischen Gerät", dessen Daten über die COM/RS232-Schnittstelle übertragen werden, und den logischen Geräten, die beispielsweise über eine USB-Schnittstelle angebunden sind, ist dabei aus Sicht der Steuer-Einrichtung vorzugsweise nicht erkennbar.

In einer besonders bevorzugten Weiterbildung ist die weitere erfindungsgemäße Anordnung derart ausgestaltet, dass das elektrische Gerät ein Funkmodul ist. Hierdurch wird vorteilhafterweise die Flexibilität der Anbindung eines Funkmoduls an eine Steuer-Einrichtung deutlich erhöht.

Die der vorliegenden Erfindung hinsichtlich des Verfahrens zur Grunde liegende Aufgabe wird darüber hinaus erfindungsgemäß gelöst durch ein Verfahren zur Übertragung von Daten zwischen einer Steuer-Einrichtung und einem elektrischen Gerät, das über einen Anschluss ersten Typs zumindest ein logisches Gerät bereitstellt, bei dem nach Anbinden des elektrischen Gerätes über den Anschluss ersten Typs an eine Verbindungs-Einheit sowie Anbinden des elektrischen Gerätes über einen Anschluss zweiten Typs an die Verbindungs-Einheit und Anbinden der Verbindungs-Einheit an die Steuer-Einrichtung jeweils einem logischen Gerät erster oder zweiter Art zugeordnete Daten zwischen einer steuereinrichtungsseitigen Schnittstelle ersten Typs der Verbindungs-Einheit und der Steuer-Einrichtung übertragen werden, einem logischen Gerät erster Art zugeordnete Daten zwischen einer geräteseitigen Schnittstelle des ersten Typs der Verbindungs-Einheit und dem Anschluss ersten Typs des elektrischen Gerätes übertragen werden und Daten zwischen einer geräteseitigen Schnittstelle zweiten Typs der Verbindungs-Einheit und einem Anschluss zweiten Typs des elektrischen Gerätes übertragen werden, wobei die Daten im Zuge der Übertragung einem Datenwandler zugeführt werden.

Das weitere erfindungsgemäße Verfahren ist bevorzugt, da es ermöglicht, eine Schnittstelle zweiten Typs des elektrischen Gerätes in ein logisches Gerät einer Schnittstelle ersten Typs umzuwandeln und der Steuer-Einrichtung als zusätzliches logisches Gerät zur Verfügung zu stellen. Hinsichtlich weiterer Vorteile des Weiteren erfindungsgemäßen Verfahrens sei auf die entsprechenden Ausführungen im Zusammenhang mit der erfindungsgemäßen weiteren Anordnung verwiesen.

Vorzugsweise kann das weitere erfindungsgemäße Verfahren auch so ablaufen, dass als elektrisches Gerät ein USB-Gerät mit einem Anschluss ersten Typs in Form eines USB-Anschlusses, als steuereinrichtungsseitige Schnittstelle ersten Typs und geräteseitige Schnittstelle des ersten Typs jeweils eine USB-Schnittstelle und als Steuer-Einrichtung ein USB-Host verwendet wird, wobei die Verbindungs-Einheit gegenüber dem elektrischen Gerät als USB-Host und gegenüber der Steuer-Einrichtung als USB-Gerät dient. Dies bietet den Vorteil, dass die von dem elektrischen Gerät in Form des USB-Gerätes zur Verfügung gestellte Schnittstelle zweiten Typs mit Hilfe der Verbindungs-Einheit in ein logisches USB-Gerät umgewandelt und zusätzlich zu anderen logischen USB-Geräten des elektrischen Gerätes über die Verbindungs-Einheit an der Steuer-Einrichtung in Form des USB-Hosts angemeldet werden kann. Dies bedeutet, dass die Schnittstelle zweiten Typs aus Sicht der Steuer-Einrichtung vollkommen analog zu der Schnittstelle ersten Typs und den über diese bereitgestellten logischen Geräte des USB-Gerätes betrieben werden kann.

Vorzugsweise ist das erfindungsgemäße weitere Verfahren so ausgebildet, dass als logische Geräte USB-Interfaces des elektrischen Gerätes verwendet werden. Dies ist vorteilhaft, da es sich bei USB-Interfaces um die üblicherweise im Zusammenhang mit USB verwendeten beziehungsweise definierten logischen Geräte handelt.

In einer bevorzugten Weiterbildung läuft das weitere erfindungsgemäße Verfahren so ab, dass als geräteseitige Schnittstelle zweiten Typs eine COM/RS232-Schnittstelle verwendet wird. Dies ist vorteilhaft, da elektrische Geräte häufig neben beispielsweise einer Schnittstelle ersten Typs in Form einer USB-Schnittstelle eine Schnittstelle zweiten Typs in Form einer COM/RS232-Schnittstelle aufweisen. Diese im Vergleich zu USB andersartige physikalische Schnittstelle kann mittels der Verbindungs-Einheit vorteilhafterweise in ein logisches USB-Gerät umgewandelt werden. Somit ist seitens der Steuer-Einrichtung vorteilhafterweise insbesondere weder eine entsprechende COM/RS232-Schnittstelle erforderlich, noch eine anderweitig unterschiedliche Behandlung des mittels der Verbindungs-Einheit bereitgestellten zusätzlichen logischen Gerätes.

Hinsichtlich der Vorrichtung wird die der vorliegenden Erfindung zugrunde liegende Aufgabe darüber hinaus erfindungsgemäß gelöst durch eine Verbindungs-Einheit zur Übertragung von Daten zwischen einer Steuer-Einrichtung und einem elektrischen Gerät, das über einen Anschluss ersten Typs mehrere logische Geräte bereitstellt, die Verbindungs-Einheit mit einer steuereinrichtungsseitigen Schnittstelle ersten Typs zur Übertragung von jeweils einem logischen Gerät erster oder zweiter Art zugeordneten Daten zwischen der Verbindungs-Einheit und der Steuer-Einrichtung, einer geräteseitigen Schnittstelle des ersten Typs zur Übertragung der einem logischen Gerät erster Art zugeordneten Daten zwischen der Verbindungs-Einheit und dem Anschluss ersten Typs des elektrischen Gerätes, einer geräteseitigen Schnittstelle zweiten Typs zur Übertragung von Daten zwischen der Verbindungs-Einheit und einem Anschluss zweiten Typs des elektrischen Gerätes und einem zwischen der steuereinrichtungsseitigen Schnittstelle und der geräteseitigen Schnittstelle zweiten Typs angeordneten Datenwandler.

Die erfindungsgemäße Verbindungs-Einheit ist bevorzugt, da sie es ermöglicht, eine Schnittstelle zweiten Typs des elektrischen Gerätes in ein logisches Gerät bezogen auf die Schnittstelle ersten Typs umzuwandeln. Hierdurch wird die Flexibilität bei der Übertragung von Daten zwischen einer Steuer-Einrichtung und einem elektrischen Gerät erhöht, wodurch sich vorteilhafterweise erweiterte Anwendungsmöglichkeiten ergeben.

In einer bevorzugten Ausführungsform der erfindungsgemäßen Verbindungs-Einheit sind die steuereinrichtungsseitige Schnittstelle ersten Typs und die geräteseitige Schnittstelle ersten Typs jeweils USB (Universal Serial Bus)-Schnittstellen und die Verbindungs-Einheit ist gegenüber dem elektrischen Gerät als USB-Host und gegenüber der Steuer-Einrichtung als USB-Gerät ausgebildet. Diese Ausführungsform der erfindungsgemäßen Verbindungs-Einheit ist vorteilhaft, da USB die Definition verschiedener logischer Geräte auf einer physikalischen Schnittstelle erlaubt. Dies wird durch eine entsprechende Konfiguration im Rahmen eines Anmeldeprozesses ermöglicht.

Weiterhin kann die erfindungsgemäße Verbindungs-Einheit vorzugsweise auch derart ausgebildet sein, dass die geräteseitige Schnittstelle zweiten Typs eine COM/RS232-Schnittstelle ist. Entsprechend den vorherigen Ausführungen ist die Verwendung einer COM/RS232-Schnittstelle als geräteseitige Schnittstelle insbesondere aufgrund der weiten Verbreitung dieser Schnittstelle bevorzugt.

In einer besonders bevorzugten Ausführungsform der erfindungsgemäßen Verbindungs-Einheit ist die Verbindungs-Einheit zusätzlich als Verbindungs-Einrichtung ausgebildet. Dies bietet den grundsätzlichen Vorteil, dass eine derart ausgebildete Verbindungs-Einheit im Rahmen der Übertragung von Daten zwischen einer Steuer-Einrichtung und einem elektrischen Gerät, das mehrere logische Gerät bereitstellt, überaus vielseitig und flexibel einsetzbar ist. So bietet eine entsprechende Verbindungs-Einheit einerseits die Möglichkeit, beispielsweise eine COM/RS232-Schnittstelle des elektrischen Gerätes gegenüber der Steuer-Einrichtung etwa als logisches USB-Gerät anzumelden, so dass eine Unterstützung von COM/RS232 durch die Steuer-Einrichtung nicht erforderlich ist. Darüber hinaus ist es mittels der als Verbindungs-Einrichtung ausgebildeten Verbindungs-Einheit weiterhin auch möglich, das elektrische Gerät mit mehreren Steuer-Einrichtungen zu verbinden. Somit eröffnet diese bevorzugte Ausführungsform der erfindungsgemäßen Verbindungs-Einheit vielfältige neue Möglichkeiten zur Übertragung von Daten zwischen einer Steuer-Einrichtung und einem elektrischen Gerät.

Zur weiteren Erläuterung der Erfindung zeigt
- Figur 1: in einer schematischen Skizze ein Ausführungsbeispiel der erfindungsgemäßen Anordnung mit einem Ausführungsbeispiel der erfindungsgemäßen Verbindungs-Einrichtung,
- Figur 2: in einer schematischen Skizze ein Ausführungsbeispiel der weiteren erfindungsgemäßen Anordnung mit einem Ausführungsbeispiel der erfindungsgemäßen Verbindungs-Einheit und
- Figur 3: in einer schematischen Skizze ein zweites Ausführungsbeispiel der weiteren erfindungsgemäßen Anordnung mit einem zweiten Ausführungsbeispiel der erfindungsgemäßen VerbindungsEinheit, bei dem die Verbindungs-Einheit gleichzeitig als Verbindungs-Einrichtung ausgebildet ist.

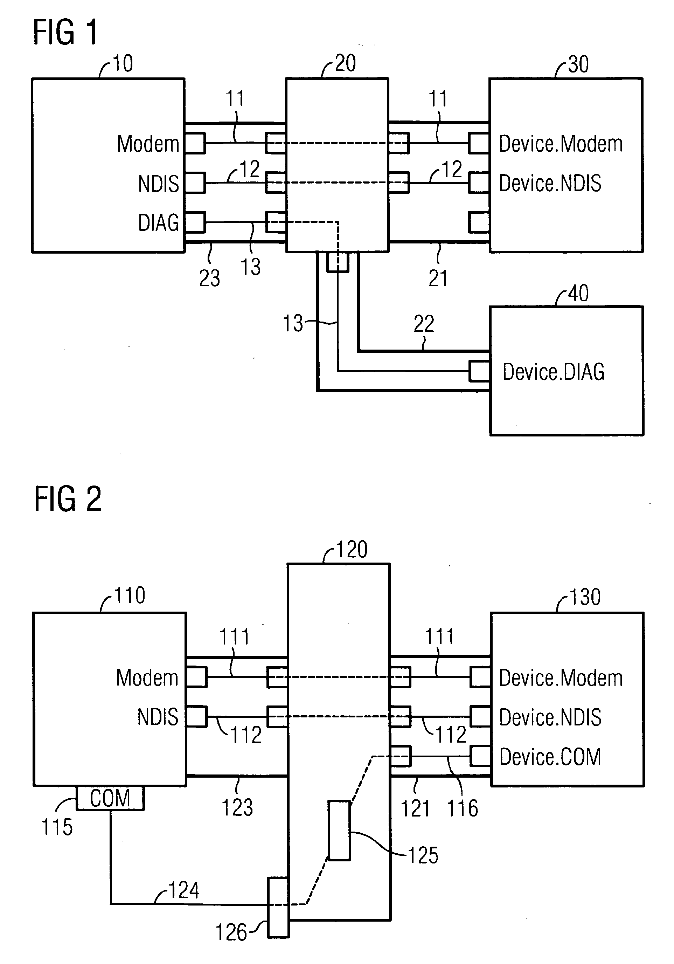

Figur 1 zeigt in einer schematischen Darstellung ein Ausführungsbeispiel der erfindungsgemäßen Anordnung mit einem Ausführungsbeispiel der erfindungsgemäßen Verbindungs-Einrichtung. Dargestellt ist ein elektrisches Gerät 10, bei dem es sich beispielsweise um ein Funkmodul handeln kann. Das elektrische Gerät 10 stellt über einen in Figur 1 aus Gründen der Übersichtlichkeit nicht separat dargestellten Anschluss in Form eines USB (Universal Serial Bus)-Anschlusses mehrere logische Geräte 11, 12 und 13 bereit. In dem in Figur 1 dargestellten Ausführungsbeispiel handelt es sich bei den logischen Geräten 11, 12 und 13 um eine Modemfunktionalität, eine Netzwerkkarte gemäß dem NDIS (Network Devide Interface Specification)-Standard sowie eine Diagnose-Schnittstelle DIAG. Dabei sind die logischen Geräte als USB-Interfaces ausgebildet, die im Rahmen eines Anmeldevorgangs des elektrischen Gerätes 10 bei der Steuer-Einrichtung 30 konfiguriert und gleichzeitig der Steuer-Einrichtung 30 bekannt gemacht worden sind.

Darüber hinaus zeigt Figur 1 eine Steuer-Einrichtung 30. Sofern nun das elektrische Gerät 10 unmittelbar über eine USB-Schnittstelle mit der Steuer-Einrichtung 30 verbunden wäre, so könnte beispielsweise das Problem auftreten, dass die Steuer-Einrichtung 30 in Form des USB-Hosts nicht in der Lage ist, alle von dem elektrischen Gerät 10 in Form des USB-Gerätes zur Verfügung gestellten logischen Geräte 11, 12 und 13 zu betreiben, obwohl dies für den konkreten Anwendungsfall erforderlich ist. In dem dargestellten Ausführungsbeispiel sei konkret angenommen, dass eine Übertragung von Diagnosedaten, etwa in Form von so genannten Traces, von dem elektrische Gerät 10 in Form des Funkmoduls über die Diagnose-Schnittstelle DIAG in Form des logischen Gerätes 13 zur Auswertung an eine Steuer-Einrichtung erforderlich ist. Dabei besteht in dem beschriebenen Ausführungsbeispiel jedoch das Problem, dass die Steuer-Einrichtung 30, an die das elektrische Gerät 10 zur Übertragung von den logischen Geräten 11 und 12 zugeordneten Daten angeschlossen ist, die von dem elektrischen Gerät 10 angebotenen Diagnosedaten nicht verarbeiten kann. Ursache hierfür kann beispielsweise sein, dass die Leistungsfähigkeit der Steuer-Einrichtung 30 für eine entsprechende Verarbeitung nicht ausreicht oder aber das für den Auswertungsprozess benötigte Betriebssystem oder Programm auf der Steuer-Einrichtung 30 nicht verfügbar ist. Die Steuer-Einrichtung 30 in Form des USB-Hosts, an dem das elektrische Gerät 10 in Form des USB-Gerätes angeschlossen ist, ist somit nicht in der Lage, alle von dem elektrischen Gerät 10 zur Verfügung gestellten logischen Geräte zu betreiben.

Um dieses Problem zu lösen, weist das in Figur 1 dargestellte Ausführungsbeispiel der erfindungsgemäßen Anordnung eine zweite Steuer-Einrichtung 40 sowie eine das elektrische Gerät 10 über Schnittstellen 21, 22 und 23 jeweils mit den Steuer-Einrichtungen 30 und 40 verbindende Verbindungs-Einrichtung 20 auf. Die Verbindungs-Einrichtung 20 verfügt über eine erste Schnittstelle 21 zur Übertragung von einem logischen Gerät erster Art 11, 12 zugeordneten Daten zwischen der Verbindungs-Einrichtung 20 und der Steuer-Einrichtung 30.

An dieser Stelle sei angemerkt, dass die Schnittstellen 21, 22 und 23 in Figur 1 aus Gründen der Übersichtlichkeit jeweils in Form der entsprechenden Verbindungen mit dem elektrischen Gerät bzw. der jeweiligen Steuer-Einrichtung 30 bzw. 40 dargestellt sind, d.h. auf eine separate Darstellung entsprechender Anschlüsse der Verbindungs-Einrichtung 20 wurde verzichtet. Generell kann die eigentliche Verbindung der Verbindungs-Einrichtung 20 über die Schnittstellen mit den weiteren Komponenten mittels verschiedener bekannter Verbindungsarten, wie beispielsweise im Falle drahtgebundener Schnittstellen mittels Kabeln und im Falle drahtloser Schnittstellen mittels entsprechender Übertragungsvorrichtungen, beispielsweise unter Verwendung des Bluetooth-Standards, erfolgen. Insbesondere für die erste Schnittstelle ist beispielsweise auch eine Verbindung mittels eines so genannten Board-to-Board-Verbinders geeignet. Dies gilt insbesondere für den Fall, dass das elektrische Gerät 10 und die Verbindungs-Einrichtung 20 als eine gemeinsame Komponente, etwa in Form einer entsprechenden elektronischen Einrichtung, ausgebildet sind.

Die Verbindungs-Einrichtung 20 weist darüber hinaus eine zweite Schnittstelle 22 auf, die zur Übertragung von dem logischen Gerät zweiter Art 13 zugeordneten Daten mit der zweiten Steuer-Einrichtung 40 verbunden ist.

Generell sei angemerkt, dass das elektrische Gerät 10 grundsätzlich eine beliebige Anzahl logischer Geräte erster Art 11, 12 und logischer Geräte zweiter Art 13 anbieten kann. Dabei sind die logischen Geräte erster Art 11, 12 **dadurch gekennzeichnet, dass** für sie eine Übertragung von Daten zwischen dem elektrischen Gerät 10 und der Steuer-Einrichtung 30 vorgesehen bzw. erforderlich sind. Dem hingegen wird für die logischen Geräte zweiter Art 13 eine Übertragung von Daten zwischen dem elektrischen Gerät 10 und der zweiten Steuer-Einrichtung 40 benötigt. In Abwandlung des in Figur 1 dargestellten Ausführungsbeispiels könnte das elektrische Gerät 10 alternativ beispielsweise auch jeweils ein logisches Gerät erster Art und ein logisches Gerät zweiter Art oder beispielsweise auch insgesamt fünf logische Geräte anbieten, von denen zwei als logische Geräte erster Art und drei als logische Geräte zweiter Art ausgebildet sind.

Neben der ersten Schnittstelle 21 und der zweiten Schnittstelle 22 weist die Verbindungs-Einrichtung 20 eine dritte Schnittstelle 23 zur Übertragung von jeweils einem logischen Gerät erster oder zweiter Art 11, 12 beziehungsweise 13 zugeordneten Daten zwischen der Verbindungs-Einrichtung 20 und dem Anschluss des elektrischen Gerätes 10 auf. Entsprechend den vorherigen Ausführungen handelt es sich bei dem vorliegenden Ausführungsbeispiel bei der dritten Schnittstelle 23 um eine physikalische Verbindung in Form einer USB-Schnittstelle. Dies bedeutet, dass die in dem elektrischen Gerät 10 in Form des USB-Gerätes konfigurierten logischen Geräte 11, 12 und 13 in Form entsprechender USB-Interfaces wahlfrei unterschiedlichen Steuer-Einrichtungen 30, 40 in Form unterschiedlicher USB-Hosts zur Verfügung gestellt werden können. Zu diesem Zweck dient die Verbindungs-Einrichtung 20 dem elektrischen Gerät 10 in Form des USB-Gerätes vorteilhafterweise als USB-Host und den Steuer-Einrichtungen 30 und 40 entsprechend als USB-Gerät. Hierdurch wird es ermöglicht, dass die von dem elektrischen Gerät 10 in Form des USB-Gerätes zur Verfügung gestellten logischen Geräte in Form der USB-Interfaces mittels der Verbindungs-Einrichtung 20 auf die verschiedenen Steuer-Einrichtungen 30 und 40 aufgeteilt werden. Dabei ist die Verbindungs-Einrichtung 20 vorzugsweise dahingehend für alle an ihr angeschlossenen Komponenten transparent, dass aus Sicht dieser Komponenten, d.h. seitens des elektrischen Gerätes 10 sowie der Steuer-Einrichtungen 30 und 40, nicht erkennbar ist, dass die Verbindungs-Einrichtung 20 der Übertragung der Daten zwischengeschaltet ist. So ist für die an die Verbindungs-Einrichtung 20 angeschlossenen Steuer-Einrichtungen 30 und 40 jeweils nur eine Untermenge der logischen Geräte 11, 12 und 13 des an die Verbindungs-Einrichtung 20 angeschlossenen elektrischen Gerätes 10 als logisches Gerät sichtbar. In dem Ausführungsbeispiel der Figur 1 ist es somit möglich, die Diagnoseschnittstelle DIAG des elektrischen Gerätes 10 in Form des logischen Gerätes 13 auf die Steuer-Einrichtung 40 umzuleiten, d.h. die entsprechenden Daten anstatt an die Steuer-Einrichtung 30 an die zweite Steuer-Einrichtung 40 zu übertragen.

Figur 2 zeigt in einer schematischen Skizze ein Ausführungsbeispiel der weiteren erfindungsgemäßen Anordnung mit einem Ausführungsbeispiel der erfindungsgemäßen Verbindungs-Einheit. Dabei sind ein elektrisches Gerät 110 sowie eine Steuer-Einrichtung 130 dargestellt. Analog zu dem Ausführungsbeispiel der Figur 1 sei angenommen, dass es sich bei dem elektrischen Gerät 110 um ein USB-Gerät, etwa in Form eines Funkmoduls, und bei der Steuer-Einrichtung 130 um einen USB-Host, etwa in Form eines Rechners, handelt. Neben einem aus Gründen der Übersichtlichkeit wiederum nicht dargestellten Anschluss ersten Typs verfügt das elektrische Gerät 110 über einen Anschluss zweiten Typs 115, bei dem es sich in dem beschriebenen Ausführungsbeispiel um einen Anschluss für eine COM/RS232-Schnittstelle handeln soll.

In Abhängigkeit von der jeweiligen Funktion des elektrischen Gerätes 110 sowie der Steuer-Einrichtung 130 kann nun das Problem bestehen, dass die Steuer-Einrichtung 130 die von dem elektrischen Gerät 110 über den Anschluss zweiten Typs angebotene COM/RS232-Schnittstelle als logisches Gerät über USB benötigt. Dies bedeutet, dass es seitens der Steuer-Einrichtung 130 gewünscht ist, dass die COM/RS232-Schnittstelle des elektrischen Gerätes 110 sich als logisches USB-Gerät des elektrischen Gerätes 110 darstellt. In anderen Worten besteht die Anforderung, dass im Rahmen entsprechender Übertragungen von Daten seitens der Steuer-Einrichtung 130 kein Unterschied zwischen den über den Anschluss ersten Typs bereitstellten logischen Geräten 111, 112 des elektrischen Gerätes 110 sowie der über die COM/RS232-Schnittstelle bereitgestellten Funktionalität erkennbar sein soll.

Zur Lösung des beschriebenen Problems weist die Anordnung gemäß dem Ausführungsbeispiel der Figur 2 eine das elektrische Gerät 110 über Schnittstellen 121, 123 und 124 mit der Steuer-Einrichtung 130 verbindende Verbindungs-Einheit 120 auf. Diese verfügt über eine steuereinrichtungsseitige Schnittstelle ersten Typs 121 zur Übertragung von jeweils einem logischen Gerät erster Art 111, 112 oder zweiter Art 116 zugeordneten Daten zwischen der Verbindungs-Einheit 120 und der Steuer-Einrichtung 130. Des Weiteren weist die Verbindungs-Einheit 120 eine geräteseitige Schnittstelle des ersten Typs 123 zur Übertragung der einem logischen Gerät erster Art 111, 112 zugeordneten Daten zwischen der Verbindungs-Einheit 120 und dem Anschluss ersten Typs des elektrischen Gerätes 110 auf. Entsprechend der vorherigen Beschreibung handelt es sich in dem Ausführungsbeispiel der Figur 2 bei den Schnittstellen ersten Typs 121 und 123 jeweils um USB-Schnittstellen.

Die Verbindungs-Einheit 120 weist darüber hinaus eine geräteseitige Schnittstelle zweiten Typs 124 in Form einer COM/RS232-Schnittstelle zur Übertragung der Daten zwischen der Verbindungs-Einheit 120 und dem Anschluss zweiten Typs 115 des elektrischen Gerätes 110 auf. Zur besseren Verdeutlichung ist weiterhin ein entsprechender Anschluss zweiten Typs 126 seitens der Verbindungs-Einheit gezeigt. Um nun die betreffenden Daten zwischen dem elektrischen Gerät 110 und der Steuer-Einrichtung 130 über die geräteseitige Schnittstelle zweiten Typs 124 sowie die steuereinrichtungsseitige Schnittstelle ersten Typs 121 übertragen zu können, weist die Verbindungs-Einheit 120 einen zwischen der steuereinrichtungsseitigen Schnittstelle ersten Typs 121 und der geräteseitigen Schnittstelle zweiten Typs 124 angeordneten Datenwandler 125 auf. Der Datenwandler 125 wandelt die geräteseitige Schnittstelle zweiten Typs 124 in Form der COM/RS232-Schnittstelle des elektrischen Gerätes 110 in ein logisches USB-Gerät 116 um. Dies bedeutet, dass durch den Datenwandler 125 je nach Übertragungsrichtung der jeweiligen Daten eine Protokollumwandlung entweder von COM/RS232 nach USB oder von USB nach COM/RS232 vorgenommen wird.

Vorteilhafterweise wird somit eine physikalische Schnittstelle anderer Art in Form der geräteseitigen Schnittstelle zweiten Typs 124 in eine Schnittstelle ersten Typs umgewandelt. Dabei betrifft die Umwandlung der Schnittstellen nicht nur die jeweiligen physikalischen Anschlüsse, sondern insbesondere eine entsprechende Umwandlung der übertragenen Daten. Hierdurch wird es beispielsweise ermöglicht, dass zusätzlich zu den logischen Geräten 111 und 112 des elektrischen Gerätes 110 in Form des USB-Gerätes ein zusätzliches logisches Gerät 116 bei der Steuer-Einrichtung 130 angemeldet wird. Bei diesem zusätzlichen logischen Gerät kann es sich beispielsweise um eine Kommunikationsschnittstelle COM handeln, über die das elektrische Gerät 110, in Form des als USB-Gerätes ausgebildeten Funkmoduls, beispielsweise mittels so genannter AT-Kommandos, gesteuert werden kann. Dies bedeutet, dass mittels der Verbindungs-Einheit 120 die COM/RS232-Schnittstelle des elektrischen Gerätes 110 der Steuer-Einrichtung 130 als eine Art "virtueller COM-Port (Device.com)" über die steuereinrichtungsseitige Schnittstelle ersten Typs 121 in Form der USB-Schnittstelle angeboten wird.

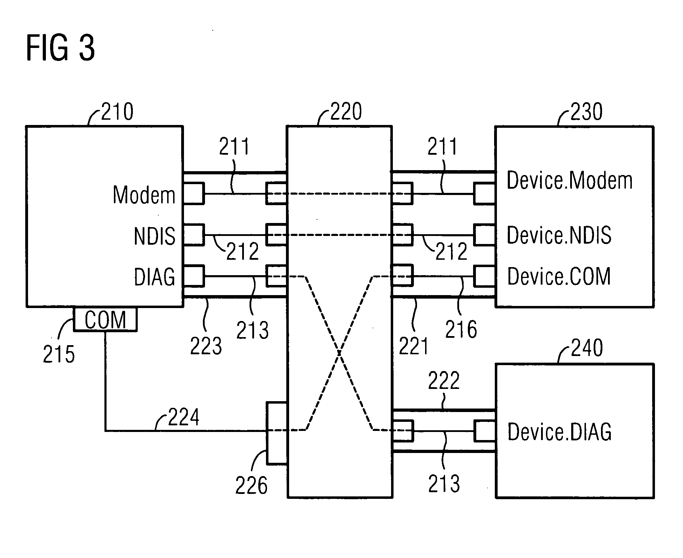

Figur 3 zeigt in einer schematischen Skizze ein zweites Ausführungsbeispiel der weiteren erfindungsgemäßen Anordnung mit einem zweiten Ausführungsbeispiel der erfindungsgemäßen Verbindungs-Einheit, bei dem die Verbindungs-Einheit gleichzeitig als Verbindungs-Einrichtung ausgebildet ist.

Wie in Figur 3 erkennbar, vereinigt die Verbindungs-Einheit 220 die Funktionalität der Verbindungs-Einrichtung 20 des Ausführungsbeispiels der Figur 1 sowie der Verbindungs-Einheit 120 des Ausführungsbeispiels der Figur 2. Hierbei handelt es sich offensichtlich um eine besonders bevorzugte Ausführungsform der erfindungsgemäßen weiteren Anordnung sowie der erfindungsgemäßen Verbindungs-Einheit, da hierdurch eine ganz besonders flexible Übertragung von Daten zwischen dem elektrischen Gerät 210 und den Steuer-Einrichtungen 230 und 240 ermöglicht wird. Dies betrifft einerseits das Anbinden der zwei Steuer-Einrichtungen 230 und 240 an das eine elektrische Gerät 210, wobei unterschiedliche logische Geräte 211, 212, 213 des elektrischen Gerätes 210 an der Steuer-Einrichtung 230 beziehungsweise der zweiten Steuer-Einrichtung 240 bereitgestellt werden. Darüber hinaus ermöglicht es die Verbindungs-Einheit 220 eine COM/RS232-Schnittstelle eines Anschlusses zweiten Typs 215 des elektrischen Gerätes 210 als zusätzliches logisches Gerät 216 an der Steuer-Einrichtung 230 bereitzustellen. Um sowohl die Funktion einer Steuer-Einrichtung auch als einer Steuer-Einheit wahrnehmen zu können, weist die Verbindungs-Einheit 220 eine erste bzw. steuereinrichtungsseitige Schnittstelle ersten Typs 221, eine zweite Schnittstelle 222, eine dritte bzw. geräteseitige Schnittstelle des ersten Typs 223, eine geräteseitige Schnittstelle zweiten Typs 224 sowie einen Anschluss zweiten Typs 226 auf.

Dies bedeutet, dass die Verbindungs-Einheit 220 auf überaus vielfältige Art und Weise einsetzbar ist, und somit weitere Anwendungsmöglichkeiten des elektrischen Gerätes 210 sowie der Steuer-Einrichtungen 230 und 240 erschließt. Aus diesem Grund handelt es sich bei dem in Figur 3 dargestellten Ausführungsbeispielen der erfindungsgemäßen Anordnung bzw. der erfindungsgemäßen Verbindungs-Einheit um im Rahmen der vorliegenden Erfindung ganz besonders bevorzugte Ausführungsformen.

## Patentansprüche

1. Verbindungs-Einrichtung (20), die ausgebildet ist, zur Übertragung von Daten zwischen einer ersten Steuer-Einrichtung (30) und einem elektrischen Gerät (10), das über einen Anschluss mehrere logische Geräte (11, 12, 13) bereitstellt, und ausgebildet ist zur gleichzeitigen Datenübertragung zwischen einer von der ersten Steuer-Einrichtung (30) verschiedenen zweiten Steuer-Einrichtung (40) und dem elektrischen Gerät (10), wobei die Verbindungs-Einrichtung (20) weiter als Schnittstellen zur Aufteilung der mehreren, vorzugsweise aller, logischen Geräte (11, 12, 13) des elektrischen Geräts (10) auf die wenigstens erste und zweite Steuereinrichtung (30, 40) aufweist:
- eine erste Schnittstelle (21), ausgebildet zur Übertragung von einem logischen Gerät erster Art (11, 12) zugeordneten Daten zwischen der Verbindungs-Einrichtung (20) und der ersten Steuer-Einrichtung (30),
- eine zweite Schnittstelle (22), ausgebildet zur Übertragung von einem logischen Gerät zweiter Art (13) zugeordneten Daten zwischen der Verbindungs-Einrichtung (20) und der zweiten Steuer-Einrichtung (40) und
- eine dritte Schnittstelle (23), ausgebildet zur Übertragung von jeweils einem logischen Gerät erster oder zweiter Art (11, 12; 13) zugeordneten Daten zwischen der Verbindungs-Einrichtung (20) und dem Anschluss des elektrischen Gerätes (10).

2. Verbindungs-Einrichtung nach Anspruch 1,
**dadurch gekennzeichnet, dass**
- die Schnittstellen (21, 22, 23) USB (Universal Serial Bus) Schnittstellen sind und
- die Verbindungs-Einrichtung (20) gegenüber dem elektrischen Gerät (10) als USB-Host und gegenüber den Steuer-Einrichtungen (30, 40) als USB-Gerät ausgebildet ist.

3. Anordnung zur Übertragung von Daten zwischen einer ersten Steuer-Einrichtung (30) und einem elektrischen Gerät (10), das über einen Anschluss mehrere logische Geräte (11, 12, 13) bereitstellt,
**gekennzeichnet durch**
- eine von der ersten Steuer-Einrichtung (30) verschiedene, zweite Steuer-Einrichtung (40) sowie
- eine das elektrische Gerät (10) jeweils über Schnittstellen (21, 22, 23) mit den Steuer-Einrichtungen (30, 40) zur Datenübertragung gleichzeitig verbindende Verbindungs-Einrichtung (20) nach Anspruch 1 oder 2, die Schnittstellen aufweist, die zur Aufteilung der mehreren, vorzugsweise aller, logischen Geräte (11, 12, 13) des elektrischen Geräts (10) auf die wenigstens erste und zweite Steuereinrichtung (30, 40) ausgebildet sind,
- deren erste Schnittstelle (21) zur Übertragung von einem der ersten Steuer-Einrichtung (30) zur Verfügung stehenden logischen Gerät erster Art (11, 12) zugeordneten Daten mit der ersten Steuer-Einrichtung (30) verbunden ist,
- deren zweite Schnittstelle (22) zur Übertragung von einem der zweiten Steuer-Einrichtung (40) zur Verfügung stehenden logischen Gerät zweiter Art (13) zugeordneten Daten mit der zweiten Steuer-Einrichtung (40) verbunden ist und
- deren dritte Schnittstelle (23) zur Übertragung von jeweils einem logischen Gerät erster oder zweiter Art (11, 12; 13) zugeordneten Daten mit dem Anschluss des elektrischen Gerätes (10) verbunden ist.

4. Anordnung nach Anspruch 3,
**dadurch gekennzeichnet, dass**
- die Schnittstellen (21, 22, 23) USB (Universal Serial Bus)-Schnittstellen sind, wobei das elektrische Gerät (10) als USB-Gerät, der Anschluss als USB-Anschluss und die Steuer-Einrichtungen (30, 40) als USB-Hosts ausgebildet ist bzw. sind, und
- die Verbindungs-Einrichtung (20) gegenüber dem elektrischen Gerät (10) als USB-Host und gegenüber den Steuer-Einrichtungen (30, 40) als USB-Gerät ausgebildet ist.

5. Anordnung nach Anspruch 4,
**dadurch gekennzeichnet, dass**
die logischen Geräte (11, 12, 13) USB-Interfaces des elektrischen Gerätes (10) sind.

6. Anordnung nach einem der Ansprüche 3 bis 5,
**dadurch gekennzeichnet, dass**
das elektrische Gerät (10) ein Funkmodul ist.

7. Verfahren zur Übertragung von Daten, insbesondere bei einer Anordnung nach Anspruch 3 bis 6, zwischen einer ersten Steuer-Einrichtung (30) und einem elektrischen Gerät (10), das über einen Anschluss mehrere logische Geräte (11, 12, 13) bereitstellt, **dadurch gekennzeichnet, dass**
nach einem Anbinden des elektrischen Gerätes (10) über den Anschluss an eine Verbindungs-Einrichtung (20) und einem zur Datenübertragung gleichzeitigen Anbinden der Verbindungs-Einrichtung (20) an die erste Steuer-Einrichtung (30) sowie an eine von der ersten Steuereinrichtung (30) verschiedenen zweite Steuer-Einrichtung (40), die mehreren, vorzugsweise alle, logischen Geräte (11, 12, 13) des elektrischen Geräts (10) auf die wenigstens erste und zweite Steuereinrichtung (30, 40) aufgeteilt sind, derart, dass
- einem logischen Gerät erster Art (11, 12) zugeordnete Daten zwischen einer ersten Schnittstelle (21) der Verbindungs-Einrichtung (20) und der ersten Steuer-Einrichtung (30) übertragen werden,
- einem logischen Gerät zweiter Art (13) zugeordnete Daten zwischen einer zweiten Schnittstelle (22) der Verbindungs-Einrichtung (20) und der zweiten Steuer-Einrichtung (40) übertragen werden und
- jeweils einem logischen Gerät erster oder zweiter Art (11, 12; 13) zugeordnete Daten zwischen einer dritten Schnittstelle (23) der Verbindungs-Einrichtung (20) und dem Anschluss des elektrischen Gerätes (10) übertragen werden.

8. Verfahren nach Anspruch 7,
**dadurch gekennzeichnet, dass**
als elektrisches Gerät (10) ein USB-Gerät mit einem Anschluss in Form eines USB-Anschlusses und als Steuer-Einrichtungen (30, 40) USB-Hosts verwendet wird bzw. werden, wobei die Verbindungs-Einrichtung (20) gegenüber dem elektrischen Gerät (10) als USB-Host und gegenüber den Steuer-Einrichtungen (30, 40) als USB-Gerät dient.

9. Verfahren nach Anspruch 8,
**dadurch gekennzeichnet, dass**
als logische Geräte (11, 12, 13) USB-Interfaces des elektrischen Gerätes (10) verwendet werden.

10. Verfahren nach einem der Ansprüche 7 bis 9,
**dadurch gekennzeichnet, dass**
als elektrisches Gerät (10) ein Funkmodul verwendet wird.

11. Verbindungs-Einheit (120), die ausgebildet ist zur Übertragung von Daten zwischen einer Steuer-Einrichtung (130) und einem elektrischen Gerät (110), das über einen Anschluss ersten Typs mehrere logische Geräte (111, 112) bereitstellt, wobei die Verbindungs-Einheit (120) aufweist:
- eine steuereinrichtungsseitige Schnittstelle ersten Typs (121), ausgebildet zur Übertragung von jeweils einem logischen Gerät erster oder zweiter Art (111, 112; 116) zugeordneten Daten zwischen der Verbindungs-Einheit (120) und der Steuer-Einrichtung (130),
- eine geräteseitige Schnittstelle des ersten Typs (123), ausgebildet zur Übertragung der dem logischen Gerät erster Art (111, 112) zugeordneten Daten zwischen der Verbindungs-Einheit (120) und dem Anschluss ersten Typs des elektrischen Gerätes (110),
- einer von den Schnittstellen (121, 123) ersten Typs verschiedenen geräteseitigen Schnittstelle zweiten Typs (124), ausgebildet zur Übertragung von Daten zwischen der Verbindungs-Einheit (120) und einem vom Anschluss des ersten Typs des elektrischen Geräts (110) verschiedenen Anschluss zweiten Typs (115) des elektrischen Gerätes (110) und
- einem zwischen der steuereinrichtungsseitigen Schnittstelle (121) und der geräteseitigen Schnittstelle zweiten Typs (124) angeordneten Datenwandler (125), der zur Umwandlung von übertragenen Daten zwischen einem von der geräteseitigen Schnittstelle zweiten Typs (124) unterstützten Format in ein von der steuereinrichtungsseitigen Schnittstelle ersten Typs (121) unterstütztes Format ausgebildet ist.

12. Verbindungs-Einheit nach Anspruch 11,
**dadurch gekennzeichnet, dass**
- die steuereinrichtungsseitige Schnittstelle ersten Typs (121) und die geräteseitige Schnittstelle ersten Typs (123) jeweils USB (Universal Serial Bus)-Schnittstellen sind und
- die Verbindungs-Einheit (120) gegenüber dem elektrischen Gerät (110) als USB-Host und gegenüber der Steuer-Einrichtung (130) als USB-Gerät ausgebildet ist.

13. Verbindungs-Einheit nach einem der Ansprüche 11 oder 12,
**dadurch gekennzeichnet, dass**
die geräteseitige Schnittstelle zweiten Typs (124) eine COM/RS232-Schnittstelle ist.

14. Verbindungs-Einheit nach einem der Ansprüche 11 bis 13,
**dadurch gekennzeichnet, dass**
die Verbindungs-Einheit (220) zusätzlich als Verbindungs-Einrichtung gemäß einem der Ansprüche 1 oder 2 ausgebildet ist.

15. Anordnung zur Übertragung von Daten zwischen einer Steuer-Einrichtung (130) und einem elektrischen Gerät (110), das über einen Anschluss ersten Typs zumindest ein logisches Gerät (111, 112) bereitstellt,
**gekennzeichnet durch**
- eine das elektrische Gerät (110) über Schnittstellen (121, 123, 124) mit der Steuer-Einrichtung (130) zur Datenübertragung verbindende Verbindungs-Einheit (120) nach einem der Ansprüche 11 bis 14 mit
- einer steuereinrichtungsseitigen Schnittstelle ersten Typs (121), ausgebildet zur Übertragung von jeweils einem logischen Gerät erster oder zweiter Art (111, 112; 116) zugeordneten Daten zwischen der Verbindungs-Einrichtung (120) und der Steuer-Einrichtung (130),
- einer geräteseitigen Schnittstelle des ersten Typs (123), ausgebildet zur Übertragung der einem logischen Gerät erster Art (111, 112) zugeordneten Daten zwischen der Verbindungs-Einrichtung (120) und dem Anschluss ersten Typs des elektrischen Gerätes (110),
- einer von den Schnittstellen (121, 123) ersten Typs verschiedenen geräteseitigen Schnittstelle zweiten Typs (124), ausgebildet zur Übertragung von Daten zwischen der Verbindungs-Einrichtung (120) und einem vom Anschluss ersten Typs des elektrischen Geräts (110) verschiedenen Anschluss zweiten Typs (115) des elektrischen Gerätes (110) und
- einem zwischen der steuereinrichtungsseitigen Schnittstelle ersten Typs (121) und der geräteseitigen Schnittstelle zweiten Typs (124) angeordneten Datenwandler (125), der zur Umwandlung von übertragenen Daten zwischen einem von der geräteseitigen Schnittstelle zweiten Typs (124) unterstützten Format in ein von der steuereinrichtungsseitigen Schnittstelle ersten Typs (121) unterstütztes Format ausgebildet ist.

16. Anordnung nach Anspruch 15,
**dadurch gekennzeichnet, dass**
- die steuereinrichtungsseitige Schnittstelle ersten Typs (121) und die geräteseitige Schnittstelle ersten Typs (123) USB (Universal Serial Bus)-Schnittstellen sind, wobei das elektrische Gerät (110) als USB-Gerät, der Anschluss ersten Typs als USB-Anschluss und die Steuer-Einrichtung (130) als USB-Host ausgebildet ist, und
- die Verbindungs-Einrichtung (120) gegenüber dem elektrischen Gerät (110) als USB-Host und gegenüber der Steuer-Einrichtung (130) als USB-Gerät ausgebildet ist.

17. Anordnung nach Anspruch 16,
**dadurch gekennzeichnet, dass**
die logischen Geräte (111, 112) USB-Interfaces des elektrischen Gerätes (110) sind.

18. Anordnung nach einem der Ansprüche 15 bis 17,
**dadurch gekennzeichnet, dass**
die geräteseitige Schnittstelle zweiten Typs (124) eine COM/RS232-Schnittstelle ist.

19. Anordnung nach einem der Ansprüche 15 bis 18,
**dadurch gekennzeichnet, dass**
das elektrische Gerät (110) ein Funkmodul ist.

20. Verfahren zur Übertragung von Daten insbesondere bei einer Anordnung nach einem der Ansprüche 15 bis 19 zwischen einer Steuer-Einrichtung (130) und einem elektrischen Gerät (110), das über einen Anschluss ersten Typs zumindest ein logisches Gerät (111, 112) bereitstellt,
**dadurch gekennzeichnet, dass**
nach Anbinden des elektrischen Gerätes (110) über den Anschluss ersten Typs an eine Verbindungs-Einrichtung (120) sowie Anbinden des elektrischen Gerätes (110) über einen vom Anschluss ersten Typs des elektrischen Geräts (110) verschiedenen Anschluss
zweiten Typs (115) an die Verbindungs-Einrichtung (120) und Anbinden der Verbindungs-Einrichtung (120) an die Steuer-Einrichtung (130) zur Datenübertragung
- jeweils einem logischen Gerät erster oder zweiter Art (111, 112; 116) zugeordnete Daten zwischen einer steuereinrichtungsseitigen Schnittstelle ersten Typs (121) der Verbindungs-Einrichtung (120) und der Steuer-Einrichtung (130) übertragen werden,
- einem logischen Gerät erster Art (111, 112) zugeordnete Daten zwischen einer geräteseitigen Schnittstelle des ersten Typs (123) der Verbindungs-Einrichtung (120) und dem Anschluss ersten Typs des elektrischen Gerätes (110) übertragen werden und
- Daten zwischen einer von den Schnittstellen (121, 123) erste Typs verschiedenen geräteseitigen Schnittstelle zweiten Typs (124) der Verbindungs-Einrichtung (120) und einem Anschluss zweiten Typs (115) des elektrischen Gerätes (110) übertragen werden, wobei die Daten im Zuge der Übertragung einem Datenwandler (125) zugeführt werden, der die Daten zwischen einem von der geräteseitigen Schnittstelle zweiten Typs (124) unterstützten Format in ein von der steuereinrichtungsseitigen Schnittstelle ersten Typs (121) unterstütztes Format umwandelt.

21. Verfahren nach Anspruch 20,
**dadurch gekennzeichnet, dass**
als elektrisches Gerät (110) ein USB-Gerät mit einem Anschluss ersten Typs in Form eines USB-Anschlusses, als steuereinrichtungsseitige Schnittstelle ersten Typs (121) und geräteseitige Schnittstelle des ersten Typs (123) jeweils eine USB-Schnittstelle und als Steuer-Einrichtung (130) ein USB-Host verwendet wird, wobei die Verbindungs-Einheit (120) gegenüber dem elektrischen Gerät (110) als USB-Host und gegenüber der Steuer-Einrichtung (130) als USB-Gerät dient.

22. Verfahren nach Anspruch 21,
**dadurch gekennzeichnet, dass**
als logische Geräte (111, 112) USB-Interfaces des elektrischen Gerätes (110) verwendet werden.

23. Verfahren nach einem der Ansprüche 20 bis 22,
**dadurch gekennzeichnet, dass**
als geräteseitige Schnittstelle zweiten Typs (124) eine COM/RS232-Schnittstelle verwendet wird.

## Claims

1. Connecting device (20), which is designed to transmit data between a first controller (30) and an electrical device (10), which provides multiple logical devices (11, 12, 13) via one connection, and is designed for simultaneous data transmission between a second controller (40) which is different from the first controller (30) and the electrical device (10), the connecting device (20) also having, as interfaces for distribution of the multiple, preferably all, logical devices (11, 12, 13) of the electrical device (10) to at least the first and second controllers (30, 40):
- a first interface (21), which is designed for transmission of data assigned to a logical device of the first type (11, 12) between the connecting device (20) and the first controller (30),
- a second interface (22), which is designed for transmission of data assigned to a logical device of the second type (13) between the connecting device (20) and the second controller (40), and
- a third interface (23), which is designed for transmission of data assigned to a logical device of the first or second type (11, 12; 13) between the connecting device (20) and the connection of the electrical device (10).

2. Connecting device according to Claim 1,
**characterized in that**
- the interfaces (21, 22, 23) are USB (Universal Serial Bus) interfaces, and
- the connecting device (20) is in the form of a USB host in relation to the electrical device (10), and in the form of a USB device in relation to the controllers (30, 40).

3. Arrangement for transmitting data between a first controller (30) and an electrical device (10), which provides multiple logical devices (11, 12, 13) via one connection,
**characterized by**
- a second controller (40) which is different from the first controller (30), and
- a connecting device (20) according to Claim 1 or 2, which simultaneously connects the electrical device (10) via interfaces (21, 22, 23) to the controllers (30, 40) for data transmission, and which has interfaces which are designed for distribution of the multiple, preferably all, logical devices (11, 12, 13) of the electrical device (10) to at least the first and second controllers (30, 40),
- of which the first interface (21) is connected to the first controller (30) for transmission of data assigned to a logical device of the first type (11, 12) which is available to the first controller (30),
- of which the second interface (22) is connected to the second controller (40) for transmission of data assigned to a logical device of the second type (13) which is available to the second controller (40), and
- of which the third interface (23) is connected to the connection of the electrical device (10) for transmission of data assigned to a logical device of the first or second type (11, 12; 13).

4. Arrangement according to Claim 3,
**characterized in that**
- the interfaces (21, 22, 23) are USB (Universal Serial Bus) interfaces, the electrical device (10) being in the form of a USB device, the connection being in the form of a USB connection, and the controllers (30, 40) being in the form of USB hosts, and
- the connecting device (20) is in the form of a USB host in relation to the electrical device (10), and in the form of a USB device in relation to the controllers (30, 40).

5. Arrangement according to Claim 4,
**characterized in that**
the logical devices (11, 12, 13) are USB interfaces of the electrical device (10).

6. Arrangement according to any one of Claims 3 to 5,
**characterized in that**
the electrical device (10) is a radio module.

7. Method for transmission of data, in particular in the case of an arrangement according to Claims 3 to 6, between a first controller (30) and an electrical device (10), which provides multiple logical devices (11, 12, 13) via one connection, **characterized in that** after connection of the electrical device (10) via the connection to a connecting device (20) and simultaneous connection of the connecting device (20) to the first controller (30) and to a second controller (40) which is different from the first controller (30) for data transmission, the multiple, preferably all, logical devices (11, 12, 13) of the electrical device (10) are distributed to at least the first and second controllers (30, 40), so that
- data assigned to a logical device of the first type (11, 12) are transmitted between a first interface (21) of the connecting device (20) and the first controller (30),
- data assigned to a logical device of the second type (13) are transmitted between a second interface (22) of the connecting device (20) and the second controller (40), and
- data assigned to a logical device of the first or second type (11, 12; 13) are transmitted between a third interface (23) of the connecting device (20) and the connection of the electrical device (10) .

8. Arrangement according to Claim 7,
**characterized in that**
as the electrical device (10), a USB device with a connection in the form of a USB connection is used, and as controllers (30, 40) USB hosts are used, the connecting device (20) acting as a USB host in relation to the electrical device (10), and as a USB device in relation to the controllers (30, 40).

9. Arrangement according to Claim 8,
**characterized in that**
as logical devices (11, 12, 13), USB interfaces of the electrical device (10) are used.

10. Arrangement according to any one of Claims 7 to 9,
**characterized in that**
as the electrical device (10), a radio module is used.

11. Connecting unit (120), which is designed to transmit data between a controller (130) and an electrical device (110), which provides multiple logical devices (111, 112) via a connection of the first type, the connecting unit (120) having:
- a controller-side interface of the first type (121), which is designed to transmit data assigned to a logical device of the first or second type (111, 112; 116) between the connecting unit (120) and the controller (130),
- a device-side interface of the first type (123), which is designed to transmit data assigned to the logical device of the first type (111, 112) between the connecting unit (120) and the connection of the first type of the electrical device (110),
- a device-side interface of the second type (124), which is different from the interfaces (121, 123) of the first type, and which is designed to transmit data between the connecting unit (120) and a connection of the second type (115) of the electrical device (110), said connection being different from the connection of the first type of the electrical device (110), and
- a data converter (125), which is arranged between the controller-side interface (121) and the device-side interface of the second type (124), and which is designed to convert transmitted data from a format which the device-side interface of the second type (124) supports into a format which the controller-side interface of the first type (121) supports.

12. Connecting unit according to Claim 11,
**characterized in that**
- the controller-side interface of the first type (121) and the device-side interface of the first type (123) are each USB (Universal Serial Bus) interfaces, and
- the connecting unit (120) is in the form of a USB host in relation to the electrical device (110), and in the form of a USB device in relation to the controller (130).

13. Connecting unit according to one of Claims 11 or 12,
**characterized in that**
the device-side interface of the second type (124) is a COM/RS232 interface.

14. Connecting unit according to any one of Claims 11 to 13,
**characterized in that**
the connecting unit (220) is additionally in the form of a connecting device according to one of Claims 1 or 2.

15. Arrangement for transmitting data between a controller (130) and an electrical device (110), which provides at least one logical device (111, 112) via a connection of the first type,
**characterized by**
- a connecting unit (120), which connects the electrical device (110) via interfaces (121, 123, 124) to the controller (130) for data transmission, according to any one of Claims 11 to 14, with
- a controller-side interface of the first type (121), which is designed to transmit data assigned to a logical device of the first or second type (111, 112; 116) between the connecting device (120) and the controller (130),
- a device-side interface of the first type (123), which is designed to transmit data assigned to a logical device of the first type (111, 112) between the connecting device (120) and the connection of the first type of the electrical device (110),
- a device-side interface of the second type (124), which is different from the interfaces (121, 123) of the first type, and which is designed to transmit data between the connecting device (120) and a connection of the second type (115) of the electrical device (110), said connection being different from the connection of the first type of the electrical device (110), and
- a data converter (125), which is arranged between the controller-side interface of the first type (121) and the device-side interface of the second type (124), and which is designed to convert transmitted data from a format which the device-side interface of the second type (124) supports into a format which the controller-side interface of the first type (121) supports.

16. Arrangement according to Claim 15,
**characterized in that**
- the controller-side interface of the first type (121) and the device-side interface of the first type (123) are USB (Universal Serial Bus) interfaces, the electrical device (110) being in the form of a USB device, the connection of the first type being in the form of a USB connection, and the controller (130) being in the form of a USB host, and
- the connecting device (120) is in the form of a USB host in relation to the electrical device (110), and in the form of a USB device in relation to the controller (130).

17. Arrangement according to Claim 16,
**characterized in that**
the logical devices (111, 112) are USB interfaces of the electrical device (110).

18. Arrangement according to any one of Claims 15 to 17,
**characterized in that**
the device-side interface of the second type (124) is a COM/RS232 interface.

19. Arrangement according to any one of Claims 15 to 18,
**characterized in that**
the electrical device (10) is a radio module.

20. Method for transmitting data, in particular in the case of an arrangement according to any one of Claims 15 to 19, between a controller (130) and an electrical device (110), which provides at least one logical device (111, 112) via a connection of the first type,
**characterized in that**
after the electrical device (110) is connected via the connection of the first type to a connecting device (120), and the electrical device (110) is connected via a connection of the second type (115) to the connecting device (120), said connection being different from the connection of the first type of the electrical device (110), and the connecting device (120) is connected to the controller (130) for data transmission,
- data assigned to a logical device of the first or second type (111, 112; 116) are transmitted between a controller-side interface of the first type (121) of the connecting device (120) and the controller (130),
- data assigned to a logical device of the first type (111, 112) are transmitted between a device-side interface of the first type (123) of the connecting device (120) and the connection of the first type of the electrical device (110), and
- data are transmitted between a device-side interface of the second type (124) of the connecting device (120), said interface being different from the interfaces (121, 123) of the first type, and a connection of the second type (115) of the electrical device (110), the data being fed in the course of transmission to a data converter (125), which converts the data from a format which the device-side interface of the second type (124) supports into a format which the controller-side interface of the first type (121) supports.

21. Arrangement according to Claim 20,
**characterized in that**
as the electrical device (110), a USB device is used, with a connection of the first type in the form of a USB connection, as the controller-side interface of the first type (121) and device-side interface of the first type (123) a USB interface is used in each case, and as the controller (130) a USB host is used, the connecting unit (120) acting as a USB host in relation to the electrical device (110), and as a USB device in relation to the controller (130).

22. Method according to Claim 21,
**characterized in that**
as logical devices (111, 112), USB interfaces of the electrical device (110) are used.

23. Method according to any one of Claims 20 to 22,
**characterized in that**
as the device-side interface of the second type (124), a COM/RS232 interface is used.

## Revendications

1. Dispositif (20) de liaison, qui est constitué pour la transmission de données entre un premier dispositif (30) de commande et un appareil (10) électrique, qui procure par une borne plusieurs appareils (11, 12, 13) logiques, et qui est constitué pour la transmission en même temps de données entre un deuxième dispositif (40) de commande différent du premier dispositif (30) de commande et l'appareil (10) électrique, le dispositif (20) de liaison ayant, en outre, comme interfaces pour la répartition des plusieurs, de préférence tous, appareils (11, 12, 13) logiques de l'appareil (10) électrique sur le au moins un premier et un deuxième dispositifs (30, 40) de commande:
- une première interface (21), constituée pour la transmission de données associées à un appareil logique d'un premier type (11, 12) entre le dispositif (20) de liaison et le premier dispositif (30) de commande,
- une deuxième interface (22), constituée pour la transmission de données associées à un appareil logique d'un deuxième type (13) entre le dispositif (20) de liaison et le deuxième dispositif (40) de commande et
- une troisième interface (23), constituée pour la transmission de données associées respectivement à un appareil logique d'un premier ou d'un deuxième type (11, 12, 13) entre le dispositif (20) de liaison et la borne de l'appareil (10) électrique.

2. Dispositif de liaison suivant la revendication 1,
**caractérisé en ce que**
- les interfaces (21, 22, 23) sont des interfaces USB (Universal Serial Bus) et
- le dispositif (20) de liaison est constitué par rapport à l'appareil (10) électrique en hôte USB ou par rapport aux dispositifs (30, 40) de commande en appareil USB.

3. Dispositif de transmission de données entre un premier dispositif (30) de commande et un appareil (10) électrique, qui procure plusieurs appareils (11, 12, 13) logiques par une borne,
**caractérisé par**
- un deuxième dispositif (40) de commande différent du premier dispositif (30) de commande, ainsi que
- un dispositif (20) de liaison suivant la revendication 1 ou 2, qui relie en même temps pour la transmission de données l'appareil (10) électrique respectivement par des interfaces (21, 22, 23) aux dispositifs (30, 40) de commande et qui a des interfaces, qui sont constituées pour la répartition des plusieurs, de préférence tous, appareils (11, 12, 13) logiques de l'appareil (10) électrique sur les au moins premier et deuxième dispositifs (30, 40) de commande,
- dont la première interface (21) est, pour la transmission de données associées à un appareil logique d'un premier type (11, 12) à disposition du premier dispositif (30) de commande, reliée au premier dispositif (30) de commande,
- dont une deuxième interface (22) est, pour la transmission de données d'un appareil logique d'un deuxième type (13) à disposition du deuxième dispositif (40) de commande, reliée au deuxième dispositif (40) de commande et
- dont une troisième interface (23) est, pour la transmission de données associées respectivement à un appareil logique du premier ou du deuxième type (11, 12, 13), reliée à la borne de l'appareil (10) électrique.

4. Dispositif suivant la revendication 3,
**caractérisé en ce que**
- les interfaces (21, 22, 23) sont des interfaces USB (Universal Serial Bus), l'appareil (10) électrique étant constitué en appareil USB, la borne en borne USB et les dispositifs (30, 40) de commande en hôte USB et
- le dispositif (20) de liaison est constitué par rapport à l'appareil (10) électrique en hôte USB et par rapport aux dispositifs (30, 40) de commande en appareil USB.

5. Dispositif suivant la revendication 4,
**caractérisé en ce que**
les appareils (11, 12, 13) logiques sont des interfaces USB de l'appareil (10) électrique.

6. Dispositif suivant l'une des revendications 3 à 5,
**caractérisé en ce que**
l'appareil (10) électrique est un module radio.

7. Procédé de transmission de données, notamment dans un agencement suivant la revendication 3 à 6, entre un premier dispositif (30) de commande et un appareil (10) électrique, qui procure plusieurs appareils (11, 12, 13) logiques par une borne, **caractérisé en ce que**
après une liaison de l'appareil (10) électrique par la borne sur un dispositif (20) de liaison et une liaison simultanée pour la transmission de données du dispositif (20) de liaison avec le premier dispositif (30) de commande, ainsi qu'avec un deuxième dispositif (40) de commande différent du premier dispositif (30) de commande, les plusieurs, de préférence tous, appareils (11, 12, 13) logiques de l'appareil (10) électrique sont répartis sur les au moins premier et deuxième dispositifs (30) de commande, de manière à ce que
- des données associées à un appareil logique d'un premier type (11, 12) soient transmises entre une première interface (21) du dispositif (20) de liaison et le premier dispositif (30) de commande,
- des données associées à un appareil logique d'un deuxième type (13) soient transmises entre une deuxième interface (22) du dispositif (20) de liaison et le deuxième dispositif (40) de commande et
- des données associées respectivement à un appareil logique d'un premier ou d'un deuxième type (11, 12, 13) soient transmises entre une troisième interface (23) du dispositif (20) de liaison et la borne de l'appareil (10) électrique.

8. Procédé suivant la revendication 7,
**caractérisé en ce que**
on utilise, comme appareil (10) électrique, un appareil USB ayant une borne sous la forme d'une borne USB et, comme dispositifs (30, 40) de commande, des hôtes USB, le dispositif (20) de liaison servant d'hôte USB par rapport à l'appareil électrique et d'appareil USB par rapport aux dispositifs (30, 40) de commande.

9. Procédé suivant la revendication 8,
**caractérisé en ce que**
on utilise des interfaces USB de l'appareil (10) électrique comme appareils (11, 12, 13) logiques.

10. Procédé suivant l'une des revendications 7 à 9,
**caractérisé en ce que**
on utilise un module radio comme appareil (10) électrique.

11. Unité (120) de liaison, qui est constituée pour la transmission de données entre un dispositif (130) de commande et un appareil (110) électrique, qui procure plusieurs appareils (111, 112) logiques par une borne d'un premier type, l'unité (120) de liaison comprenant:
- une interface d'un premier type (121) du côté du dispositif de commande, constituée pour la transmission de données associées respectivement à un appareil logique du premier ou du deuxième type (111, 112, 116) entre l'unité (120) de liaison et le dispositif (130) de commande,
- une interface du premier type (123) du côté de l'appareil, constituée pour la transmission de données associées à l'appareil logique d'un premier type (111, 112) entre l'unité (120) de liaison et la borne d'un premier type de l'appareil (110) électrique,
- une interface d'un deuxième type (124) du côté de l'appareil, différente des interfaces (121, 123) d'un premier type et constituée pour la transmission de données entre l'unité (120) de liaison et une borne du deuxième type (115) de l'appareil (110) électrique, différente de la borne du premier type de l'appareil (110) électrique et
- un transducteur (125) de données, monté entre l'interface (121) du côté du dispositif de commande et l'interface du deuxième type (124) du côté de l'appareil, transducteur qui est constitué pour la transformation de données transmises d'un format supporté par l'interface d'un deuxième type (124) du côté de l'appareil en un format supporté par l'interface d'un premier type (121) du côté du dispositif de commande.

12. Unité de liaison suivant la revendication 11,
**caractérisée en ce que**
- l'interface d'un premier type (121) du côté du dispositif de commande et l'interface d'un premier type (123) du côté de l'appareil sont respectivement des interfaces USB (Universal Serial Bus) et
- l'unité (120) de liaison est constituée par rapport à l'appareil (110) électrique en hôte USB et par rapport au dispositif (130) de commande en appareil USB.

13. Unité de liaison suivant l'une des revendications 11 ou 12,
**caractérisée en ce que**
l'interface d'un deuxième type (124) du côté de l'appareil est une interface COM/RS232.

14. Unité de liaison suivant l'une des revendications 11 à 13, **caractérisée en ce que**
l'unité (120) de liaison est constituée supplémentairement en dispositif de liaison suivant l'une des revendications 1 ou 2.

15. Agencement de transmission de données entre un dispositif (130) de commande et un appareil (110) électrique, qui procure au moins un appareil (111, 112) logique par une borne d'un premier type,
**caractérisé par**
- une unité (120) de liaison suivant l'une des revendications 11 à 14 reliant pour la transmission de données l'appareil (110) électrique au dispositif (130) de commande par des interfaces (121, 123, 124), comprenant
- une interface d'un premier type (121) du côté du dispositif de commande, constituée pour la transmission de données associées respectivement à un appareil logique d'un premier ou d'un deuxième type (111, 112, 116) entre le dispositif (120) de liaison et le dispositif (130) de commande,
- une interface du premier type (123) du côté de l'appareil, constituée pour la transmission de données associées à un appareil logique d'un premier type (111, 112) entre le dispositif (120) de liaison et la borne d'un premier type de l'appareil (110) électrique,
- une interface d'un deuxième type (124) du côté de l'appareil, différente des interfaces (121, 123) d'un premier type et constituée pour la transmission de données entre le dispositif (120) de liaison et une borne d'un deuxième type (115) de l'appareil (110) électrique différente de la borne d'un premier type de l'appareil (110) électrique et
- un transducteur (125) de données, qui est monté entre l'interface d'un premier type (121) du côté du dispositif de commande et l'interface d'un deuxième type (124) du côté de l'appareil et qui est destiné à la transformation de données transmises d'un format supporté par l'interface d'un deuxième type (124) du côté de l'appareil en un format supporté par l'interface d'un premier type (121) du côté du dispositif de commande.

16. Agencement suivant la revendication 15,
**caractérisé en ce que**
- l'interface d'un premier type (121) du côté du dispositif de commande et l'interface d'un premier type (123) du côté de l'appareil sont des interfaces USB (Universal Serial Bus), l'appareil (110) électrique étant constitué en appareil USB, la borne du premier type en borne USB et le dispositif (130) de commande en hôte USB et
- le dispositif (120) de liaison est constitué en borne USB par rapport à l'appareil (110) électrique et en appareil USB par rapport au dispositif (130) de commande.

17. Agencement suivant la revendication 16,
**caractérisé en ce que**
les appareils (111, 112) logiques sont des interfaces USB de l'appareil (110) électrique.

18. Agencement suivant l'une des revendications 15 à 17,
**caractérisé en ce que**
l'interface d'un deuxième type (124) du côté de l'appareil est une interface COM/RS232.

19. Agencement suivant l'une des revendications 15 à 18,
**caractérisé en ce que**
l'appareil (110) électrique est un module radio.

20. Procédé de transmission de données, notamment dans un agencement suivant l'une des revendications 15 à 19, entre un dispositif (130) de commande et un appareil (110) électrique, qui procure au moins un appareil (111, 112) logique par une borne d'un premier type,
**caractérisé en ce que**
après liaison de l'appareil (110) électrique par la borne d'un premier type à un dispositif (120) de liaison, ainsi qu'après liaison de l'appareil (110) électrique par une borne d'un deuxième type (115) différente de la borne d'un premier type d'appareil (110) électrique au dispositif (120) de liaison et après liaison du dispositif (120) de liaison au dispositif (130) de commande pour la transmission de données
- des données associées respectivement à un appareil logique d'un premier ou d'un deuxième type (111, 112, 116) sont transmises entre une interface d'un premier type (121) du dispositif (120) de liaison, du côté du dispositif de commande, et le dispositif (130) de commande,
- des données associées à un appareil logique d'un premier type (111, 112) sont transmises entre une interface du premier type (123) du dispositif (120) de liaison, du côté de l'appareil, et la borne d'un premier type de l'appareil (110) électrique et
- des données entre une interface d'un deuxième type (124) du dispositif (120) de liaison, du côté de l'appareil, différente des interfaces (121, 123) du premier type et une borne d'un deuxième type (115) de l'appareil (110) électrique, les données étant au cours de la transmission envoyées à un transducteur (125) de données, qui transforme les données d'un format supporté par l'interface d'un deuxième type (124) du côté de l'appareil en un format supporté par l'interface d'un premier type (121) du côté du dispositif de commande.

21. Procédé suivant la revendication 20,
**caractérisé en ce que**
on utilise comme appareil (10) électrique un appareil USB ayant une borne d'un premier type sous la forme d'une borne USB, comme interface d'un premier type (121) du côté du dispositif de commande et comme interface du premier type (123) du côté de l'appareil respectivement une interface USB et comme dispositif (130) de commande un hôte USB, l'unité (120) de liaison servant de hôte USB par rapport l'appareil (110) électrique et d'appareil USB par rapport au dispositif (130) de commande.

22. Procédé suivant la revendication 21,
**caractérisé en ce que**
on utilise comme appareil (111, 112) logique des interfaces USB de l'appareil (110) électrique.

23. Procédé suivant l'une des revendications 20 à 22,
**caractérisé en ce que**
on utilise une interface COM/RS232 comme interface d'un deuxième type (124) du côté de l'appareil.
